# FASCICULE DE BREVET EUROPEEN

(11) **EP 2 817 086 B1**
(45) Date de publication et mention de la délivrance du brevet: **21.12.2016**
(21) Numéro de dépôt: 13706661.9
(22) Date de dépôt: 08.02.2013
(51) Int. Cl.: B01F 1/00, C02F 1/68

(54) **DISPOSITIF DE DOSAGE D'UN RÉACTIF PAR DISSOLUTION DANS UN ÉCOULEMENT DE LIQUIDE**
VORRICHTUNG ZUM DOSIEREN EINES REAGENS DURCH AUFLÖSUNG IN EINEM FLÜSSIGKEITSSTROM
DEVICE FOR METERING A REAGENT BY DISSOLUTION IN A LIQUID FLOW

(30) Priorité: 21.02.2012 FR 1251558
(43) Date de publication de la demande: 31.12.2014
(73) Titulaire: Prodose, 31660 Bessieres (FR)
(72) Inventeur: BOUKARI, Morou, 31300 Toulouse (FR)
(74) Mandataire: Richebourg, Michel François
(86) Numéro de dépôt international: PCT/FR2013/050272
(87) Numéro de publication internationale: WO 2013/124567

(56) Documents cités:
- EP-A1- 1 289 890
- US-A- 3 474 817
- US-A- 4 917 868
- US-A- 5 089 127
- US-A- 5 181 533

## Description

### DOMAINE D'APPLICATION DE L'INVENTION

La présente invention a trait au domaine des dispositifs de dosage d'un réactif par dissolution dans un écoulement de liquide et notamment aux adaptations permettant d'en améliorer le fonctionnement et d'en faciliter la maintenance.

### DESCRIPTION DE L'ART ANTÉRIEUR

Le dosage d'un réactif par dissolution dans un écoulement de liquide est actuellement utilisé de façon courante notamment pour la désinfection de l'eau, le réactif consistant alors en un produit chloré. Des exemples sont connus des documents US5089127 et US4917868.

Dans un autre exemple plus récent, le document EP 1289890 décrit un dispositif de dosage par dissolution d'un réactif dans un écoulement de liquide, comprenant :
- un magasin à réactif, contenant au moins un galet de réactif à dissoudre, et
- une enceinte entourant au moins la partie inférieure du magasin à réactif et comprenant une entrée de liquide, des moyens d'amenée du liquide au contact du galet de réactif et des moyens de sortie du liquide. Ce dispositif comprend également des moyens de formation d'au moins un jet de liquide dirigé sensiblement radialement vers le galet à dissoudre et des moyens de support du galet dans une position exposant au moins la base de ce galet au jet de liquide.

L'effet du ou des jets de liquide sur la base du galet de réactif est fonction de l'énergie cinétique du ou des jets de liquide qui est elle-même fonction de la pression d'alimentation de liquide dans le dispositif de dosage. Ainsi, contrairement aux dispositifs de dosage précédant celui décrit dans le document EP 1289890, la dissolution du réactif dans le liquide est alors fonction de cette pression d'alimentation et s'adapte automatiquement aux variations de celle-ci, de sorte que la concentration en réactif dans le liquide puisse rester uniforme au cours du temps, même si la pression de liquide varie. L'érosion latérale proposée est plus régulière et réduit le galet par ses parois latérales et non par son fond permettant de mieux contrôler le délitement.

Ce document ne décrit pas néanmoins de dispositions liées à la maintenance de ce dispositif ni aux dispositions susceptibles de venir compléter un tel dispositif.

Ainsi par exemple, il n'est pas décrit comment sont réalisées les opérations de rechargement du magasin ni comment ladite enceinte est susceptible d'être intégrée à l'intérieur d'un dispositif de traitement plus global présentant des modules fonctionnels de traitement du liquide.

### DESCRIPTION DE L'INVENTION

Partant de cet état de fait, la demanderesse a mené des recherches visant à proposer un dispositif nouveau mettant en oeuvre les principes décrits dans le document EP 1289890 en proposant des solutions techniques quant au rechargement en galets.

Un autre objet de l'invention est de proposer un dispositif de traitement de liquide intégrant le dispositif de dosage de l'invention.

Ces recherches ont abouti à la conception d'un dispositif de dosage par dissolution d'un réactif dans un écoulement de liquide, comprenant :
- un magasin à réactif, contenant au moins un galet de réactif à dissoudre,
- une enceinte entourant au moins une extrémité du magasin à réactif,
- une entrée de liquide, des moyens d'amenée du liquide au contact du galet de réactif et des moyens de sortie du liquide,
- des moyens de formation d'au moins un jet de liquide dirigé sensiblement radialement vers le galet à dissoudre et des moyens de support du galet dans une position exposant au moins la base de ce galet au jet de liquide.

Selon l'invention, ce dispositif est remarquable en ce que ce qu'il comprend plusieurs parties :
- une base fixe regroupant ladite enceinte et une entrée de liquide, des moyens d'amenée du liquide au contact du galet de réactif et des moyens de sortie de liquide,
- une ou plusieurs cartouches formant un volume indépendant détachable regroupant ledit magasin de réactif, des moyens de formation d'au moins un jet de liquide dirigé sensiblement radialement vers le galet à dissoudre et des moyens de support du galet,
ladite cartouche venant s'associer à ladite base préformée d'au moins une zone d'accueil de ladite cartouche à des fins de dissolution du réactif.

Le conditionnement par cartouche apporte de nombreux avantages dont ceux décrits ci-après.

Il permet de disposer d'un moyen de gestion de la consommation du dispositif. Ainsi, la cartouche peut être associée à la base jusqu'à complète dissolution du réactif puis est remplacée.

Il autorise l'utilisation de galets différents et en nombre différent selon l'application.

Il permet de proposer des cartouches à usage unique qui contiennent des produits prédosés en fonction du volume de liquide à traiter.

Le principe d'une exploitation de cartouches à usage unique est particulièrement adapté au traitement de liquide en ce qu'il évite pour l'utilisateur du dispositif, le contact avec le(s) produit(s) à doser/à recharger.

Ladite cartouche adopte un corps sensiblement cylindrique préformé extérieurement d'une portion filetée venant s'engager dans un cylindre creux fileté préformé dans la base.

Ladite cartouche ainsi que sa liaison avec l'enceinte d'accueil ont fait l'objet de recherches par la demanderesse afin de proposer plusieurs solutions de fabrication et d'étanchéité. Ainsi, selon une caractéristique particulièrement avantageuse, la cartouche a fait l'objet d'une étude permettant de diminuer le nombre de pièces la constituant. Une telle configuration présente des avantages en coût de fabrication, de montage ainsi qu'en qualité d'étanchéité.

En ce qui concerne l'étanchéité de la liaison vissée entre la base et les cartouches, une première solution consiste à proposer l'application d'un ruban de téflon s'interposant entre les parties filetées mâle de la cartouche et femelle de la base. Une autre solution consiste à préformer le cylindre creux ménagé dans la base d'une rainure d'accueil d'un joint torique avec lequel vient coopérer une surface cylindrique prolongeant le manchon fileté extérieurement de la cartouche. Une telle solution est particulièrement adaptée à une exploitation avec des cartouches à usage unique en ce qu'elle permet de garantir l'étanchéité malgré la succession d'opérations d'installation et de désinstallation de cartouches.

Selon une caractéristique particulièrement avantageuse, la surface cylindrique est sensiblement conique pour faciliter l'insertion de la cartouche et proposer une mise en pression progressive du joint torique au fur et à mesure du vissage de la cartouche.

Pour faciliter la gestion du remplacement des cartouches, la ou les parois séparant les galets de l'extérieur sont transparentes.

Le dispositif de l'invention est en outre particulièrement avantageux en ce qu'il comprend un châssis sur lequel vient se fixer ladite base avec laquelle communique une canalisation issue d'un module de filtration également fixé audit châssis.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif, un mode de réalisation d'un dispositif conforme à l'invention.

### BRÈVE DESCRIPTION DES DESSINS

La figure 1 est un dessin schématique d'une vue en perspective d'un mode de réalisation d'un dispositif conforme à l'invention;
La figure 2 est une vue de côté du dispositif de la figure 1;
La figure 3 est une vue de côté en coupe de la base accueillant une cartouche;
La figure 4 est une vue de côté en coupe d'un premier mode de réalisation d'une cartouche;
La figure 5 est une vue de côté d'un deuxième mode de réalisation de la cartouche correspondant à celle illustrée en figure 3.

### DESCRIPTION DES MODES DE RÉALISATION PRÉFÉRÉS

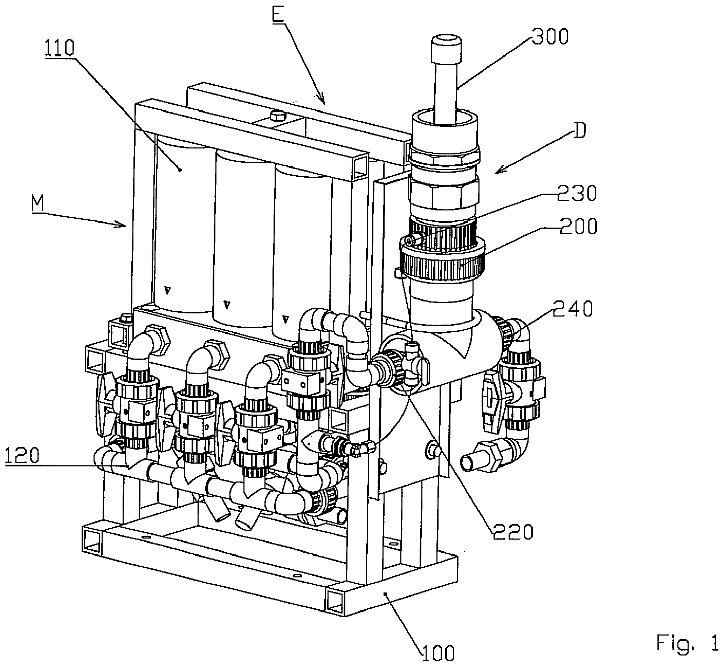

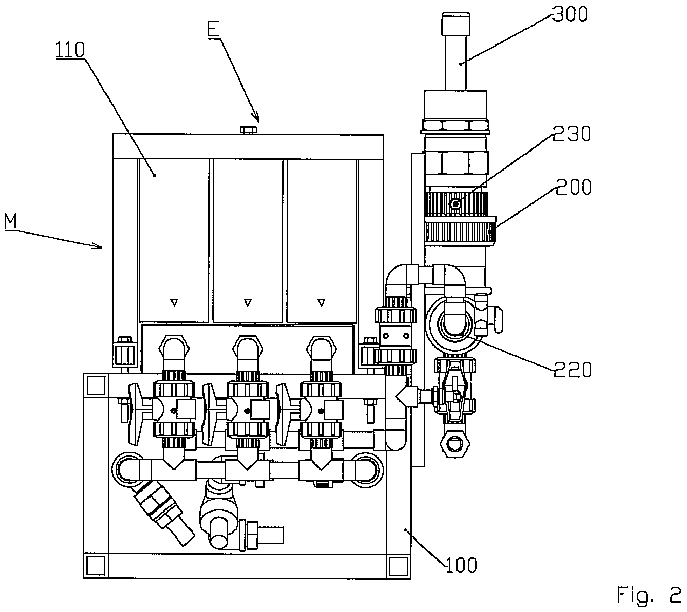

Tel qu'illustré sur les dessins des figures 1 et 2, le dispositif de dosage référencé D fait partie d'un ensemble référencé E de traitement de l'eau par exemple d'un circuit d'eau potable d'un aéronef.

Cet ensemble E comprend, fixé à un même châssis 100, un module de filtration anti-bactérien M comprenant une pluralité de filtres 110 reliés à des canalisations d'entrée et de sortie d'eau 120. Ces dernières se rejoignant pour proposer un flux principal ainsi qu'un flux dérivé d'eau filtrée, lesquels sont dirigés vers le dispositif de dosage D.

Ce dispositif D de dosage par dissolution d'un réactif dans un écoulement de liquide, comprend une base 200 traversée par lesdits flux et accueillant un magasin à réactif 300 se présentant sous la forme d'une cartouche.

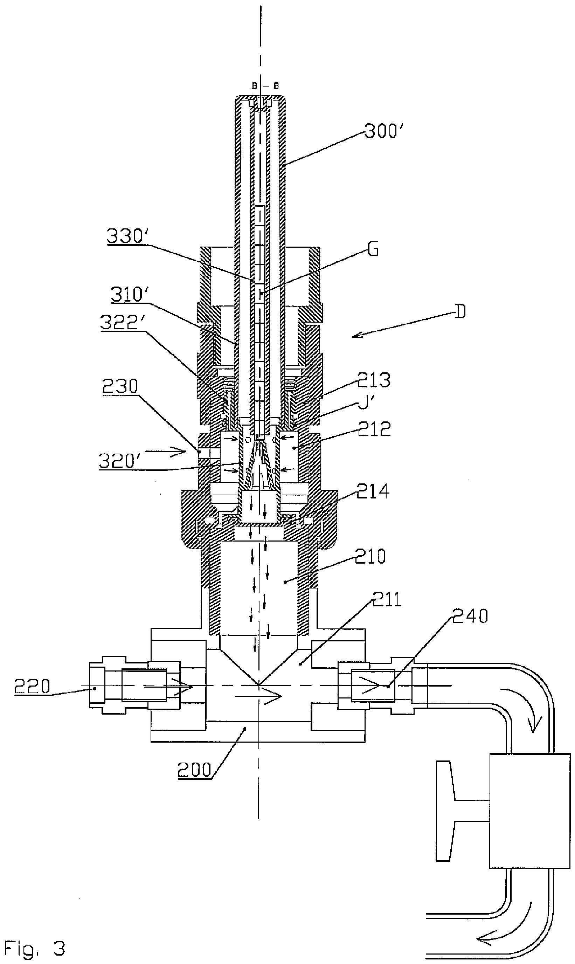

Conformément à l'invention et comme illustrée sur le dessin de la figure 3, la base fixe 200 forme un volume creux 210, ici vertical, avec lequel communiquent une première entrée de liquide 220 accueillant le flux principal et une deuxième entrée de liquide 230 accueillant le flux dérivé.

Comme illustrée, une fois la cartouche 300 installée, le dispositif D dont la base 200 accueille la partie basse de la cartouche 300 voit son volume creux 210 divisé en deux cavités :
- une cavité inférieure 211 dans laquelle débouche l'entrée de liquide 220,
- une cavité supérieure 212 dans laquelle débouche l'entrée de liquide 230 et formée par la surface intérieure de la base et par la surface extérieure de l'extrémité basse de la cartouche 300 qui vient cloisonner le volume creux 210 en venant prendre appui sur un épaulement prévu à cet effet.

Conformément aux principes de l'invention, la partie basse de la cartouche 300 est percée d'une part, de trous permettant au liquide entrant dans la cavité supérieure 212 de venir en contact du galet G de réactif selon un jeu radial et d'autre part, d'une extrémité basse ouverte pour permettre au liquide traité par le réactif de venir se mélanger au flux principal passant dans la cavité inférieure 211 laquelle débouche sur un orifice de sortie 240.

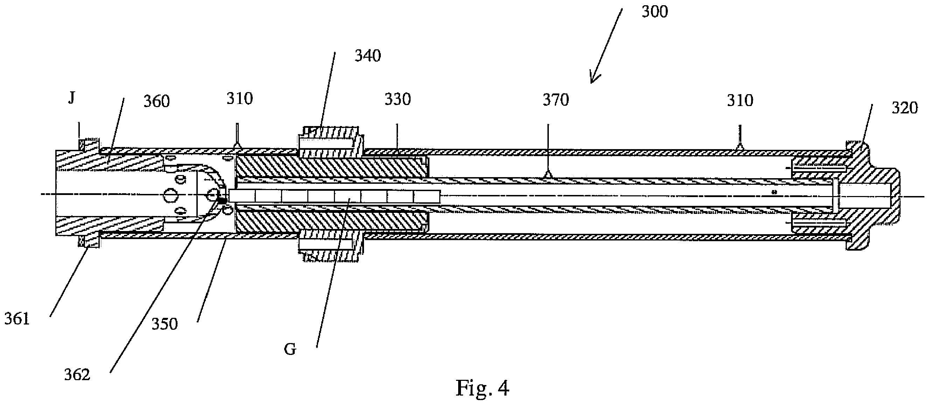

Comme illustrée sur le dessin de la figure 4, la cartouche 300 adopte une configuration cylindrique formée d'une succession de volumes tubulaires ou semi tubulaires permettant de proposer :
- un volume de stockage des galets G autorisant leur déplacement axialement vers le bas,
- une surface d'appui pour ces derniers et des moyens de formation de jet de liquide sensiblement radialement vers le galet G en appui sur ladite surface.

Plus précisément, selon le mode de réalisation non limitatif illustré, la cartouche 300 comprend un premier cylindre extérieur creux 310 fermé à une extrémité par un bouchon 320 et emmanché à une deuxième extrémité sur une première extrémité d'un manchon tubulaire 330, lequel accueille une couronne filetée extérieurement 340 de diamètre supérieur au cylindre extérieur 310. Cette couronne filetée 340 permet de venir visser dans la base 200 dans un filetage 213 prévu à cet effet, la cartouche 300. Un ruban de film d'étanchéité de type téflon vient assurer l'étanchéité de cette liaison.

Sur la deuxième extrémité du manchon tubulaire vient s'emmancher un deuxième cylindre extérieur creux 350 qui accueille par emmanchement sur sa deuxième extrémité, un manchon d'extrémité 360. Ce manchon d'extrémité forme extérieurement un épaulement 361 qui, sur un côté vient en appui sur ladite deuxième extrémité du deuxième cylindre extérieur 350 et sur un autre côté vient en appui par l'intermédiaire d'un joint J, avec une collerette 214 prévue à cet effet dans l'âme creuse du volume évidé 200 de la base 200. Ce manchon d'extrémité forme en outre intérieurement un point d'appui pour les galets G stockés coaxiaux dans un cylindre intérieur 370. Ce point d'appui constitue une surface ajourée d'orifice 363 permettant l'écoulement du galet dissous dans la partie inférieure de la base 200. Comme illustré, le deuxième cylindre extérieur 350 est préformé d'orifices permettant de créer un jet de liquide radial par rapport aux galets G venant en appui sur le point d'appui 362. Comme illustrée, une première extrémité dudit cylindre intérieur coopère avec le bouchon 320 et une deuxième extrémité coopère avec l'âme creuse dudit manchon 330.

Ladite cartouche est d'une part, conçue pour permettre la dissolution du galet mais également pour permettre le passage du liquide dans l'âme creuse du cylindre intérieur afin d'autoriser le glissement des galets G dans ladite âme creuse.

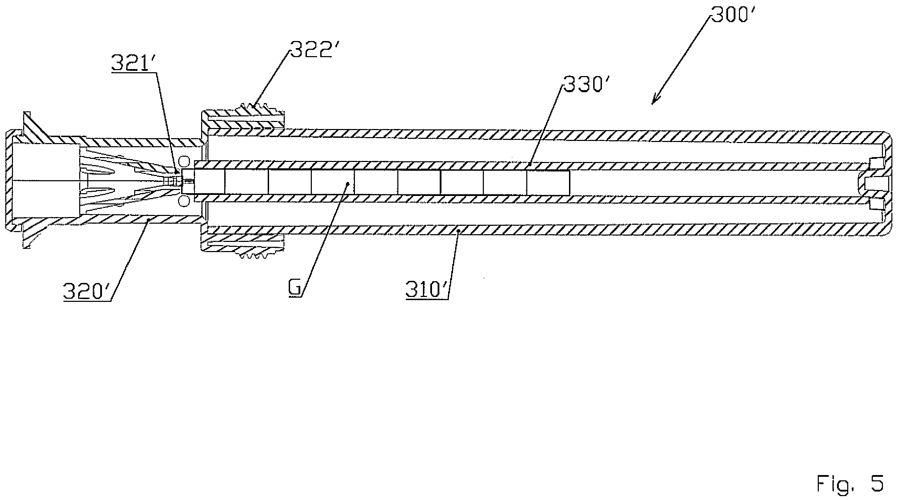

Afin de diminuer le nombre de pièces constituant cette cartouche ainsi que pour améliorer l'étanchéité des pièces entre elles et des cartouches avec la base, un autre mode de réalisation de cartouche référencé 300' est proposé et illustré par le dessin de la figure 5.

Selon ce mode de réalisation, la cartouche 300' reprend les mêmes volumes et la plupart des surfaces fonctionnelles de la cartouche 300 mais avec une fabrication simplifiée par un nombre réduit de pièces constitutives et par une étanchéité optimisée notamment dans sa liaison avec la base.

Ainsi, selon le mode de réalisation illustré, la cartouche 300' comprend un corps cylindrique semi tubulaire 310' fermé à une extrémité et accueillant à son autre extrémité, un manchon d'extrémité 320' préformé d'une surface d'appui interne 321' et d'un manchon extérieur fileté 322'. Ladite surface d'appui vient offrir un appui aux galets G sortant de l'extrémité d'un cylindre intérieur 330' dont l'autre extrémité vient coopérer avec le fond fermé du corps cylindrique 310'.

En diminuant le nombre de pièces, les possibilités de fuite et le nombre d'opérations de montage sont réduits. Selon un mode de réalisation préféré, ces pièces sont réalisées en plastique et sont assemblées par collage ou par soudure.

De plus, la liaison filetée est conservée mais est associée à une étanchéité par joint torique J' qui, logé dans une rainure pratiquée dans le manchon fileté de la base accueillant le manchon fileté de la cartouche 300' vient se mettre en appui avec une surface sensiblement cylindrique 323' située en aval du filetage 322'.

Selon un mode de réalisation préféré, la dite surface cylindrique sur laquelle vient s'appuyer ledit joint torique J' est légèrement conique pour faciliter son insertion et rendre la liaison plus étanche au fur et à mesure du vissage de la cartouche 300'.

Selon un mode de réalisation particulièrement avantageux, les parois des corps cylindriques entourant les galets sont transparentes permettant ainsi d'en vérifier le remplissage et la consommation.

On comprend que le dispositif, qui vient d'être ci-dessus décrit et représenté, l'a été en vue d'une divulgation plutôt que d'une limitation. Bien entendu, divers aménagements, modifications et améliorations pourront être apportés à l'exemple ci-dessus, sans pour autant sortir du cadre de l'invention.

## Revendications

1. Dispositif de dosage (D) par dissolution d'un réactif dans un écoulement de liquide, comprenant :
- un magasin à réactif, contenant au moins un galet (G) de réactif à dissoudre,
- une enceinte entourant au moins une extrémité du magasin à réactif,
- une entrée de liquide, des moyens d'amenée du liquide au contact du galet de réactif (G) et des moyens de sortie du liquide,
- des moyens de formation d'au moins un jet de liquide dirigé sensiblement radialement vers le galet (G) à dissoudre et des moyens de support du galet (G) dans une position exposant au moins la base de ce galet (G) au jet de liquide,
**CARACTÉRISÉ PAR LE FAIT QU'**il comprend plusieurs parties :
- une base (200) fixe regroupant ladite enceinte et une entrée de liquide, des moyens d'amenée du liquide au contact du galet de réactif (G) et des moyens de sortie de liquide,
- une ou plusieurs cartouches (300) formant un volume indépendant détachable regroupant ledit magasin de réactif, des moyens de formation d'au moins un jet de liquide dirigé sensiblement radialement vers le galet (G) à dissoudre et des moyens de support du galet (G),
ladite cartouche (300) venant s'associer à ladite base (200) préformée d'au moins une zone d'accueil de ladite cartouche (300) à des fins de dissolution du réactif.

2. Dispositif (D) selon la revendication 1, **CARACTÉRISÉ PAR LE FAIT QUE** ladite cartouche (300) adopte un corps sensiblement cylindrique préformé extérieurement d'une portion filetée (340) venant s'engager dans un cylindre creux fileté (213) préformé dans ladite base (200).

3. Dispositif (D) selon la revendication 2, **CARACTÉRISÉ PAR LE FAIT QU'**un ruban de téflon s'interpose entre les parties filetées mâle et femelle.

4. Dispositif (D) selon la revendication 2, **CARACTÉRISÉ PAR LE FAIT QUE** le cylindre creux (213) ménagé dans la base est préformé d'une rainure d'accueil d'un joint torique (J') avec lequel vient coopérer une surface cylindrique (323') prolongeant le manchon fileté extérieurement (322') de la cartouche (300).

5. Dispositif (D) selon la revendication 4, **CARACTÉRISÉ PAR LE FAIT QUE** ladite surface cylindrique (323') est sensiblement conique pour faciliter l'insertion de la cartouche (300') et proposer une mise en pression progressive du joint torique (J') au fur et à mesure du vissage de la cartouche (300').

6. Dispositif (D) selon la revendication 1, **CARACTÉRISÉ PAR LE FAIT QU'**il comprend un châssis (100) sur lequel vient se fixer ladite base (200) avec laquelle communique une canalisation issue d'un module de filtration (M) également fixé audit châssis (100).

7. Dispositif (D) selon la revendication 1, **CARACTÉRISÉ PAR LE FAIT QUE** la ou les parois séparant les galets (G) de l'extérieur sont transparentes.

8. Dispositif (D) selon la revendication 1, **CARACTÉRISÉ PAR LE FAIT QUE** la cartouche (300) comprend un premier cylindre extérieur creux (310) fermé à une extrémité par un bouchon (320) et emmanché à une deuxième extrémité sur une première extrémité d'un manchon tubulaire (330), lequel accueille une couronne filetée extérieurement (340) de diamètre supérieur au cylindre extérieur (310), cette couronne filetée (340) permettant de venir visser dans la base (200) dans un filetage (213) prévu à cet effet, la cartouche (300), un deuxième cylindre extérieur creux 350 venant s'emmancher sur la deuxième extrémité du manchon tubulaire (330) et accueille par emmanchement sur sa deuxième extrémité, un manchon d'extrémité (360).

9. Dispositif selon la revendication 1 **CARACTÉRISÉ PAR LE FAIT QUE** la cartouche (300') comprend un corps cylindrique semi tubulaire (310') fermé à une extrémité et accueillant à son autre extrémité, un manchon d'extrémité (320') préformé d'une surface d'appui interne (321') et d'un manchon extérieur fileté (322'), ladite surface d'appui interne venant offrir un appui aux galets (G) sortant de l'extrémité d'un cylindre intérieur (330'à dont l'autre extrémité vient coopérer avec le fond fermé du corps cylindrique (310').

## Patentansprüche

1. Vorrichtung zur Dosierung (D) durch Auflösung eines Reagens in einem Flüssigkeitsstrom, Folgendes umfassend:
- ein Reagensmagazin, das zumindest eine Rolle (G) des aufzulösenden Reagens enthält,
- einen Behälter, der zumindest ein Ende des Reagensmagazins umgibt,
- einen Flüssigkeitseinlass, Mittel zum Kontaktierten der Flüssigkeit mit der Reagensrolle (G) und Auslassmittel für die Flüssigkeit,
- Mittel zum Erzeugen zumindest eines im Wesentlichen radial auf die aufzulösende Rolle (G) gerichteten Flüssigkeitsstrahls, und Mittel zum Halten der Rolle (G) in einer Stellung, welche zumindest die Basis dieser Rolle (G) dem Flüssigkeitsstrahl aussetzt,
**dadurch gekennzeichnet, dass** sie mehrere Abschnitte umfasst:
- eine feststehende Basis (200), in der der besagte Behälter und ein Flüssigkeitseinlass, Mittel zum Kontaktieren der Flüssigkeit mit der Reagensrolle (G) und Auslassmittel für eine Flüssigkeit zusammengefasst sind,
- eine oder mehrere Kartuschen (300), die ein unabhängiges abnehmbares Volumen bilden, in dem das besagte Reagensmagazin, Mittel zum Erzeugen zumindest eines im Wesentlichen radial auf die aufzulösende Rolle (G) gerichteten Flüssigkeitsstrahls, und Mittel zum Halten der Rolle (G) zusammengefasst sind,
wobei sich die besagte Kartusche (300) mit der besagten Basis (200) verbindet, die mit zumindest einer Aufnahmezone für die besagte Kartusche (300) zum Auflösen des Reagens vorgeformt ist.

2. Vorrichtung (D) nach Anspruch 1, **dadurch gekennzeichnet, dass** die besagte Kartusche (300) einen im Wesentlichen zylindrischen Körper darstellt, der außen mit einem Gewindeabschnitt (340) vorgeformt ist, der in einen Gewindehohlzylinder (213) eingreift, der in der besagten Basis (200) vorgeformt ist.

3. Vorrichtung (D) nach Anspruch 2, **dadurch gekennzeichnet, dass** ein Teflonnband zwischen die Innen- und Außengewindeabschnitte eingelegt wird.

4. Vorrichtung (D) nach Anspruch 2, **dadurch gekennzeichnet, dass** der Hohlzylinder (213), der in die Basis eingearbeitet ist, mit einer Aufnahmerille für einen O-Ring (J') vorgeformt ist, mit dem eine zylindrische Fläche (323') zusammenwirkt, die sich aus der Außengewindemuffe (322') der Kartusche (300) erstreckt.

5. Vorrichtung (D) nach Anspruch 4, **dadurch gekennzeichnet, dass** die besagte zylindrische Fläche (323') im Wesentlichen konisch ist, um die Einführung der Kartusche (300') zu erleichtern, und eine progressive Druckbeaufschlagung des O-Rings (J') vorzunehmen, je weiter man die Kartusche (300') einschraubt.

6. Vorrichtung (D) nach Anspruch 1, **dadurch gekennzeichnet, dass** sie ein Gestell (100) umfasst, auf dem die besagte Basis (200) befestigt wird, mit der eine Kanalisation aus einem Filtermodul (M) kommuniziert, das ebenfalls am besagten Gestell (100) befestigt ist.

7. Vorrichtung (D) nach Anspruch 1, **dadurch gekennzeichnet, dass** die Wand oder Wände, die die Rollen (G) von der Außenumgebung trennen, transparent sind.

8. Vorrichtung (D) nach Anspruch 1, **dadurch gekennzeichnet, dass** die Kartusche (300) einen ersten äußeren Hohlzylinder (310) umfasst, der an einem Ende mit einem Stopfen (320) verschlossen ist, und an einem zweiten Ende in ein erstes Ende einer röhrenförmigen Muffe (330) eingepresst wird, in der ein Kranz mit einem Außengewinde (340) mit einem Durchmesser aufgenommen wird, der größer ist, als der äußere Zylinder (310), wobei es dieser Gewindekranz (340) ermöglicht, die Kartusche (300) in die Basis (200) in ein dafür vorgesehenes Gewinde (213) einzuschrauben, wobei ein zweiter äußerer Hohlzylinder (350) in das zweite Ende der röhrenförmigen Muffe (330) eingepresst wird, und durch Einspressen an seinem zweiten Ende eine Endmuffe (360) aufnimmt.

9. Vorrichtung nach Anspruch 1, **dadurch gekennzeichnet, dass** die Kartusche (300') einen halbhohlen zylindrischen Körper (310') umfasst, der an einem Ende geschlossen ist, und an seinem anderen Ende eine Endmuffe (320') aufnimmt, die mit einer inneren Auflagefläche (321') und einer Außengewindemuffe ('322') vorgeformt ist, wobei die besagte innere Auflagefläche eine Auflage für die Rollen (G) bietet, die aus dem Ende eines Innenzylinders (330') austreten, dessen anderes Ende mit dem geschlossenen Boden des zylindrischen Körpers (310') zusammenwirkt.

## Claims

1. Metering device (D) by dissolution of a reagent in a liquid flow, comprising:
- a reagent magazine, containing at least one reagent tablet (G) to be .dissolved,
- an enclosure surrounding at least one end of the reagent magazine,
- a liquid inlet, means for bringing the liquid into contact with the reagent tablet (G) and liquid outlet means,
- means for forming at least one liquid jet directed substantially radially towards the tablet (G) to be dissolved and means for supporting the tablet (G) in a position that exposes at least the base of this tablet (G) to the liquid jet,
**characterized by** the fact that it comprises a plurality of parts:
- a fixed base (200) grouping together said enclosure and a liquid inlet, means for bringing the liquid into contact with the reagent tablet (G) and liquid outlet means,
- one or several cartridges (300) forming a separate detachable volume grouping together said reagent magazine, means for forming at least one liquid jet directed Substantially radially towards the tablet (G) to be dissolved and means for supporting the tablet (G),
said cartridge (300) coming to be associated with said base (200) which is preformed with at least one area for receiving said cartridge (300) for the purposes of dissolving the reagent.

2. Device (D) according to claim 1, **characterized by** the fact that said cartridge (300) adopts a substantially cylindrical body exteriorly preformed with a threaded portion (340) that engages in a threaded hollow cylinder (213) preformed in said base (200).

3. Device (D) according to claim 2, **characterized by** the fact that a strip of teflon is inserted between the male and female threaded portions.

4. Device (D) according to claim 2, **characterized by** the fact that the hollow cylinder (213) arranged in the base is preformed with a groove for receiving an O-ring (J') with which cooperates a cylindrical surface (323') extending the threaded sleeve exteriorly (322') from the cartridge (300).

5. Device (D) according to claim 4, **characterized by** the fact that said cylindrical surface (323') is substantially tapered in order to facilitate the insertion of the cartridge (300') and in order to propose a progressive pressurizing of the O-ring (J') as the cartridge is screwed (300').

6. Device (D) according to claim 1, **characterized by** the fact that it comprises a frame (100) whereon is fixed said base (200) with which communicates a duct coming from a filtration module (M) also fixed to said frame (100).

7. Device (D) according to claim 1, **characterized by** the fact that the wall or walls separating the tablets (G) from the exterior are transparent.

8. Device (D) according to claim 1, **characterized by** the fact that the cartridge (300) comprises a first outside hollow cylinder (310) closed at an end by a plug (320) and press fitted at a second end on a first end of a tubular sleeve (330), which receives an exteriorly threaded crown (340) with a diameter greater than the outside cylinder (310), this threaded crown (340) making it possible to screw the cartridge (300) in the base (200) in a threading (213) provided for this purpose, a second hollow outside cylinder (350) being press fitted onto the second end of the tubular sleeve (330) and receives via press fitting on its second end, an end sleeve (360).

9. Device according to claim 1 **characterized by** the fact that the cartridge (300') comprises a semi-tubular cylindrical body (310') closed at an end and receiving at its other end, an end sleeve (320') preformed with an internal bearing surface (321') and of a threaded outside sleeve (322'), said internal bearing surface offering a support to the tablets (G) exiting from the end of an inside cylinder (330') of which the other end cooperates with the closed bottom of the cylindrical body (310').
